(19) Europäisches Patentamt
European Patent Office
Office européen des brevets

(11) **EP 2 209 686 B1**

(12) **FASCICULE DE BREVET EUROPEEN**

(45) Date de publication et mention
de la délivrance du brevet:
**27.01.2016 Bulletin 2016/04**

(21) Numéro de dépôt: **08848480.3**

(22) Date de dépôt: **10.11.2008**

(51) Int Cl.:
*B60W 30/14* *(2006.01)*   *G01P 7/00* *(2006.01)*
*B60W 40/105* *(2012.01)*   *B60W 40/076* *(2012.01)*
*B60W 40/068* *(2012.01)*

(86) Numéro de dépôt international:
**PCT/EP2008/065215**

(87) Numéro de publication internationale:
**WO 2009/060093 (14.05.2009 Gazette 2009/20)**

(54) **SYSTÈME DE CONTRÔLE D'UN VÉHICULE COMPORTANT UNE DÉTERMINATION DE SA VITESSE INSTANTANÉE PAR RAPPORT AU SOL.**

SYSTEM ZUR STEUERUNG EINES FAHRZEUGS MIT BESTIMMUNG DER MOMENTANEN GESCHWINDIGKEIT IN RELATION ZUM BODEN

SYSTEM OR CONTROLLING A VEHICLE WITH DETERMINATION OF ITS INSTANTANEOUS SPEED RELATIVE TO THE GROUND

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **09.11.2007 FR 0758948**

(43) Date de publication de la demande:
**28.07.2010 Bulletin 2010/30**

(73) Titulaires:
• **COMPAGNIE GENERALE DES ETABLISSEMENTS MICHELIN**
**63000 Clermont-Ferrand (FR)**
• **Michelin Recherche et Technique S.A.**
**1763 Granges-Paccot (CH)**

(72) Inventeurs:
• **LINDA, Jean-Louis**
**CH-1635 La Tour-de-Treme (CH)**
• **WALSER, Daniel**
**CH-1700 Fribourg (CH)**

(74) Mandataire: **Bauvir, Jacques**
**M.F.P. Michelin**
**SGD/LG/PI - F35 - Ladoux**
**23, place des Carmes Déchaux**
**63040 Clermont-Ferrand Cedex 09 (FR)**

(56) Documents cités:
**EP-A- 1 832 881      DE-A1- 10 260 416**
**DE-A1- 19 527 531**

**Description**

*DOMAINE DE L'INVENTION*

La présente invention concerne les véhicules terrestres, notamment routiers. Elle vise en particulier les techniques de contrôle de tels véhicules et la détermination de leur vitesse par rapport au sol à cet effet, afin d'ajuster les paramètres qui déterminent son comportement et d'améliorer les conditions et la sécurité du roulage. Elle est particulièrement bien adaptée au cas où le mouvement du véhicule au sol est commandé par une ou plusieurs machines électriques spécifiques couplées à une roue motrice pour lui appliquer un couple d'entraînement ou de freinage en fonction des besoins.

*ETAT DE LA TECHNIQUE*

Les propositions de véhicules électriques se sont beaucoup développées ces dernières années. On peut citer par exemple le brevet US 5 418 437 qui décrit un véhicule à quatre roues, de type hybride série, chaque roue étant entraînée par une machine électrique qui lui est propre, un contrôleur permettant de piloter les moteurs intégrés à la roue et assurant la gestion de fourniture d'énergie aux moteurs à partir d'un alternateur ou d'une batterie. Lorsque la fourniture d'énergie s'interrompt, le mouvement de la roue sous l'action de l'inertie du véhicule peut à son tour entraîner la machine électrique et lui permettre de fonctionner en génératrice vers une charge électrique en appliquant alors un couple de freinage dit régénératif à cette roue.

Ce brevet reste silencieux sur la gestion du freinage électrique obtenu, mais on trouve dans l'état de la technique des exemples d'une telle gestion pour compléter les commandes de freinage mécanique par friction classiques. Ainsi par exemple, la demande de brevet publiée du Royaume Uni sous la référence GB 2344799 décrit un véhicule capable d'engendrer plusieurs niveaux de puissance de freinage régénératif à partir de moteurs électriques de traction, de façon à fournir une fonction simulant le freinage par compression ou freinage moteur normalement disponible avec les moteurs à combustion interne, en plus de la fonction de freinage mécanique traditionnelle.

D'une façon générale, il a déjà été proposé d'utiliser la faculté offerte par une machine électrique à bord d'un véhicule pour piloter de façon souple et précise le couple appliqué à une roue d'un véhicule qui en est équipé. Une telle possibilité a par exemple été utilisée avec les systèmes d'antiblocage de roues. Le brevet US 6 709 075 décrit un véhicule équipé d'une chaîne de traction à moteur électrique. Une fonction de freinage issu du fonctionnement de ce moteur en générateur peut être superposée au couple de freinage par friction appliqué sur chaque roue en fonction de son comportement tel que déterminé à partir d'un système ABS (contrôle d'antiblocage de roue) équipant le véhicule. Des dispositions sont prises pour éviter que le freinage régénératif n'interfère avec le bon fonctionnement du système ABS pour la régulation du freinage par friction.

Cette faculté de pilotage précise du couple appliqué à une roue est, plus généralement, bien adaptée aux systèmes de contrôle de stabilité, par la modulation du couple freinage seul ou également avec celle du couple moteur. La demande de brevet PCT publiée sous la référence WO01/76902 décrit un système de propulsion et de freinage véhicule dans lequel chaque roue susceptible d'être entraînée par un moteur à combustion interne est couplée également à une machine électrique capable de lui appliquer sélectivement un couple moteur complémentaire ou un couple freineur en fonction des commandes d'un système de contrôle de stabilité véhicule opératoire en réponse à un capteur de lacet.

Enfin la demande de brevet au Royaume Uni sous la référence GB 2 383 567 décrit également un système dans lequel une machine électrique est prévue pour fournir un couple à certaines roues d'un véhicule doté d'un moteur à combustion interne. Le niveau de ce couple supplémentaire est modulé en fonction des données fournies par un capteur de lacet.

Ainsi, il est bien connu d'utiliser le couple moteur ou freineur fourni par une machine électrique pour ajuster les efforts appliqués aux roues d'un véhicule par un moteur à combustion interne. Il est également connu d'utiliser le couple produit par une telle machine pour adapter les efforts de freinage par friction appliqués aux roues d'un véhicule à traction électrique.

Dans les deux exemples précédents un capteur de lacet est utilisé à bord du véhicule pour déterminer le niveau de couple à appliquer ou à ajouter à certaines roues du véhicule pour obtenir les effets recherchés sur le comportement. D'autres paramètres peuvent être mesurés et utilisés à cet effet. La demande de brevet européen EP 0 881 114 présente un système de contrôle pour véhicule à quatre roues couplées chacune à un moteur électrique indépendant, capable d'appliquer un couple moteur ou freineur sur chacune des roues directrices ou non. Un système de freins à disques conventionnel est en outre prévu et un capteur d'angle de braquage permet de connaître à chaque instant l'orientation des roues directrices. Chaque moteur de roue est équipé d'un capteur de vitesse de roue. Une indication de la vitesse du véhicule par rapport au sol est obtenue par l'unité de commande du système en combinant les informations issues des signaux des capteurs de roues. Il est indiqué (sans plus de détail) que cette indication peut être précisée à l'aide d'informations issues d'accéléromètres de bord et d'un système de navigation par satellite. L'unité de contrôle du système suit de façon continue le niveau de couple appliqué à chaque roue, la vitesse et l'angle de braquage de cette roue, et l'estimation de la vitesse au sol du véhicule. Elle calcule aussi la vitesse de lacet (yaw rate) et à partir de toutes ces informations détermine le glissement instantané de chacune des roues. L'unité de contrôle commande les couples de traction et de freinage en fonction des valeurs du glissement déterminées pour chaque roue et de façon à optimiser le freinage, l'accélération et le braquage en réponse aux commandes du conducteur.

En pratique, l'indication de la vitesse au sol du véhicule est une donnée essentielle pour un contrôle tel que proposé dans ce document. Aucune mesure directe à bord du véhicule ne permet seule d'avoir un accès non seulement aisé mais surtout économique et fiable à cette donnée fondamentale pour caractériser le comportement du véhicule. On doit donc la déterminer par des calculs à partir d'autres mesures plus faciles à obtenir en direct. On sait que la vitesse instantanée de chaque roue est un facteur essentiellement variable, qui est affecté de l'extérieur par les conditions du sol, tant en ce qui concerne la régularité de son profil que son état de surface, et de l'intérieur, par les commandes dont la roue est l'objet et qui affectent tant sa direction que les couples qui lui sont appliqués, et par les réactions dynamiques du véhicule proprement dit qui lui sont transmises par l'intermédiaire de la suspension du véhicule.

Ainsi la simple combinaison des signaux de mesure produits par les capteurs individuels de roues est insuffisante pour procurer une détermination valable de la vitesse du véhicule par rapport au sol, elle-même suffisamment précise, dynamique et fiable pour une appréciation en temps réel du comportement du véhicule et des ses roues. En outre pour être pratiquement acceptable, une solution doit pouvoir être mise en oeuvre facilement et à faible coût sur le véhicule.

Diverses solutions ont déjà été avancées pour tenter d'améliorer la résolution de ce problème. Le document de publication de la demande de brevet français FR 2 871 889 décrit par exemple un système qui effectue un diagnostic de la qualité de chaque mesure instantanée de la vitesse longitudinale d'une roue, à partir de la vitesse de rotation fournie par un capteur attaché à cette roue, et calcule une vitesse longitudinale du véhicule à partir d'une moyenne des vitesses longitudinales de roues obtenues, pondérées par des indices de qualité issus du diagnostic précédent. Ce diagnostic inclut également une vérification que la vitesse longitudinale de chaque roue considérée se trouve à l'intérieur d'une fourchette de valeurs assurant que la méthode de calcul, objet du brevet, est applicable (vitesse non inférieure à 15 kph et non supérieure à 250 kph). Ce diagnostic inclut également une vérification que la dérivée de la vitesse de rotation de chaque roue considérée se trouve à l'intérieur d'une certaine fourchette indiquant que la roue n'est ni bloquée, ni en état de patinage, pour rejeter les indications non conformes. Ainsi la méthode ne s'applique pas en dehors de ces différentes fourchettes. Le calcul n'est plus valable hors de ces bornes pour fournir une mesure du glissement proprement dite. Dans le cas d'une absence totale d'indication conforme à un instant donné, le système fournit une valeur de vitesse véhicule extrapolée des valeurs déterminées aux instants précédents. Indépendamment de toute discussion concernant l'applicabilité de la méthode proposée à toutes les situations, la technique d'extrapolation proposée est inadaptée à un suivi du comportement du véhicule par le système en continu, ou pendant des phases de transition pouvant durer plusieurs secondes, par opposition au cas d'un fonctionnement discontinu, par exemple dans un contrôle d'antiblocage de roue, où le système autorise, normalement, une reprise d'adhérence impliquant une nouvelle mesure valide de la vitesse, au bout d'une fraction de seconde suivant la détection d'un défaut.

Une autre proposition pour pallier les difficultés ci-dessus est exposée par le document de publication de la demande de brevet français FR 2 894 033, dans laquelle la vitesse longitudinale du véhicule est calculée en combinant des estimations de la vitesse longitudinales de certaines roues sélectionnées, obtenues à partir de capteurs de mesure de la vitesse de rotation de ces roues. Le mode de calcul est adapté à chaque mode de conduite du véhicule. La vitesse longitudinale de chaque roue est corrigée en fonction de la position éventuelle de la roue en virage, puis l'état de la roue (blocage ou patinage) est testé en fonction de la valeur du couple appliqué à cette roue. Un test est ensuite réalisé sur la cohérence entre la valeur de l'accélération obtenue à partir de la vitesse longitudinale obtenue précédemment et la mesure d'accélération longitudinale fournie par un accéléromètre à bord du véhicule. Si la cohérence est vérifiée, la vitesse longitudinale calculée est retenue. Dans le cas contraire c'est une valeur obtenue par intégration de la mesure de l'accéléromètre qui est adoptée.

Dans la pratique, la mesure de l'accéléromètre est entachée de l'erreur due à la composante de l'accélération terrestre suivant la pente éventuelle du sol sur lequel se déplace le véhicule. Il s'ensuit que, d'une part, les tests de validité des mesures de vitesse longitudinale proposés pour les roues ne paraissent pas suffisamment précis pour fournir des indications fiables de la vitesse véhicule et que, d'autre part, la méthode proposée pour tester la cohérence des accélérations et, en cas de défaut de cohérence, pour déterminer la vitesse est entachée d'erreurs incompatibles avec un fonctionnement en continu pendant des périodes qui peuvent se prolonger pendant plusieurs secondes, par exemple dans le cas d'un freinage prolongé en urgence (ou d'une accélération prononcée).

La détermination de la vitesse globale d'un véhicule par rapport au sol reste donc un enjeu substantiel pour le développement de systèmes de contrôle du comportement de véhicule. C'est plus particulièrement le cas, comme on l'a expliqué plus haut, pour les véhicules qui possèdent une ou plusieurs roues couplées chacune à une machine électrique indépendante. En outre, cet enjeu est particulièrement important dans le cas d'un véhicule électrique dont non seulement la traction mais également le freinage sont intégralement et directement dérivés de l'énergie électrique. Le demandeur a récemment proposé par exemple dans la demande de brevet N° WO 2007/107576 un tel véhicule équipé de moyens fiables pour assurer en toute circonstance la capacité à disposer d'un couple de freinage électrique régénératif sur chaque roue concernée suffisant pour garantir la sécurité du véhicule, sans l'appoint d'un freinage mécanique. Il est opportun de pouvoir faire bénéficier un tel véhicule des possibilités de contrôle dynamique et précis des couples de traction et de freinage offertes par les machines électriques pour le contrôle du comportement d'un tel véhicule.

*EXPOSE DE L'INVENTION*

Au regard des développements qui ont déjà été proposés dans l'état de la technique qui vient d'être évoqué, la présente invention vise à proposer des solutions pour déterminer à chaque instant une estimation suffisamment précise, dynamique et fiable de la vitesse d'un véhicule par rapport au sol, y compris dans des phases de conduite où la mesure des paramètres habituels de suivi du véhicule tels que la vitesse de rotation de ses roues du véhicule ne fournissent pas toujours des informations fiables pour obtenir cette vitesse à chaque instant. Elle est particulièrement bien adaptée pour contrôler le comportement d'un véhicule possédant une ou plusieurs roues commandées chacune par une ou plusieurs machines électriques propres à cette roue.

A cet effet, la présente invention a pour objet un système de contrôle de véhicule comportant une détermination de la vitesse au sol instantanée d'un véhicule possédant au moins deux roues équipées chacune d'un capteur propre à fournir une mesure fonction du mouvement de ladite roue. Ce système comporte toutes les caractéristiques de la revendication 1.

Selon un mode préféré de réalisation, l'étage de diagnostic est adapté à tester la condition de chaque roue fournissant une indication de vitesse circonférentielle sur la base d'au moins deux critères choisis parmi les trois critères suivants:

l'accélération angulaire instantanée de la roue,

la mesure du glissement instantané de cette roue, déterminée à partir des informations de vitesse angulaire issues du capteur correspondant et d'une première estimée de la vitesse globale véhicule, et

la valeur du coefficient d'adhérence de cette roue déterminé à partir d'informations accessibles à bord du véhicule.

Ainsi la validité des informations de vitesse issue de chaque roue est diagnostiquée sous plusieurs angles pour permettre de décider si ces informations peuvent ou non être prises en compte dans la détermination de la vitesse du véhicule. En l'absence d'information directe sur au moins une des roues à un instant donné, le système utilise une détermination de l'accélération du mouvement du véhicule par rapport au sol pour obtenir par intégration une estimation suffisamment précise de la vitesse recherchée.

Pour déterminer l'accélération de mouvement du véhicule, le système effectue notamment une évaluation de la pente du sol de roulage du véhicule. Les calculs montrent en effet qu'une pente de 5° d'angle par exemple induit une erreur sur la vitesse obtenue par l'intégration est de 7 km/h au bout de 4 secondes. En conséquence, même dans le cas où l'on choisirait de négliger les erreurs plus éphémères dues aux mouvements de tangage du véhicule la correction de pente est impérative. En pratique, c'est l'inclinaison de l'axe du véhicule qui est le plus souvent déterminée. Selon l'invention on détermine une première valeur de celle-ci par un premier calcul à partir d'une mesure d'accélération angulaire obtenue à partir d'au moins un capteur de roue et de la mesure issue du capteur d'accélération longitudinale de bord. En outre selon une disposition complémentaire, le système comporte de préférence un capteur, tel qu'un gyromètre, sensible aux mouvements de rotation de la caisse du véhicule autour d'un axe y transversal par rapport à l'axe d'avancement longitudinal du véhicule au sol pour effectuer un deuxième calcul de l'inclinaison longitudinale du véhicule par rapport à l'horizontale, et l'estimateur f) est opératoire en fonction de ces deux indications d'angle pour déterminer l'accélération du mouvement du véhicule par rapport au sol.

Enfin, le système est avantageusement doté d'un dispositif de filtrage comportant notamment:

j) un filtre numérique passe bas pour le traitement des premières indications d'inclinaison du véhicule à la sortie du premier dispositif de calcul,

k) un filtre numérique passe haut pour les indications d'inclinaison fournies par le deuxième dispositif de calcul et

l) un étage de composition numérique des indications des dispositifs de filtrage j) et k) pour délivrer une indication de l'inclinaison du sol corrigée à l'estimateur f).

En résumé, selon l'invention, le système tente de calculer une première estimation de vitesse globale du véhicule par rapport au sol à partir des signaux issus des capteurs de roues qui en sont équipées. Cette détermination implique une étape de diagnostic de validité sur chacune des roues pour tester la capacité de chacun de ces signaux à fournir une indication de vitesse approximative du véhicule à l'endroit de cette roue. De préférence, le test est effectué en fonction d'une batterie de critères qui visent essentiellement des conditions de la roue propres à indiquer qu'elle tourne normalement par rapport au sol en fonction du mouvement du véhicule ou au contraire qu'un écart anormal est apparu entre sa vitesse circonférentielle et celle du véhicule par rapport au sol à l'endroit de cette roue. Typiquement on utilise au moins deux critères choisis parmi l'accélération angulaire instantanée de la roue, la mesure de son glissement instantané, et la valeur de son coefficient d'adhérence de cette roue. Les indications de vitesse de roue testées comme non valides à l'issue du diagnostic ne sont pas retenues pour la détermination de l'estimation de vitesse globale. L'estimation de vitesse globale recherchée est déterminée par exemple en fonction de la moyenne des indications de roues testées comme valides après correction pour tenir compte de la position de chaque roue en cas de virage du véhicule.

Si aucune indication de vitesse de roue n'est validée par l'étage de diagnostic, le système détermine alors l'accélération de mouvement instantanée du véhicule en fonction d'une part d'une mesure d'accélération longitudinale réalisée par un accéléromètre de bord et des mesures d'accélération angulaire des roues dérivées des capteurs de roues. Dans le cas où le sol de roulage du véhicule n'est pas horizontal, les signaux issus de l'accéléromètre de bord fournissent une indication d'accélération longitudinale du véhicule qui n'est pas représentative de l'accélération effective du mouvement du véhicule par rapport au sol du fait que, au-delà d'un angle de pente de quelques degrés seulement, la composante parallèle au sol de la gravite sur la mesure de l'accéléromètre ne peut pas être négligée. Une correction s'impose qui peut être obtenue selon l'invention à partir de la mesure des accélérations de roues qui sont directement liées au mouvement effectif du véhicule, complétée de préférence par une autre correction issue par exemple de la mesure d'un gyromètre fournissant la vitesse de tangage du véhicule. Un traitement de filtrage en fréquence des corrections réalisées permet d'accéder à des valeurs d'accélération de mouvement suffisamment stable et précises pour pouvoir être intégrées en fournissant des valeurs adéquates de la vitesse véhicule en l'absence de signaux valides en provenance des capteurs de roues.

Par rapport aux solutions antérieurement décrites, le système se caractérise essentiellement par sa simplicité et son coût de réalisation abordable pour des performances exceptionnelles en dynamique et en précision. Il permet ainsi de réaliser, notamment dans le cas d'un véhicule dont les roues sont équipées de machines électriques, un contrôle de comportement véhicule efficace même lorsque les paramètres qui caractérisent son mouvement entrent dans des phases d'instabilité potentielle qui peuvent se prolonger par exemple en cas de freinage bien au-delà des durées habituellement rencontrées dans les systèmes existants.

On connaît bien entendu déjà dans l'état de la technique des systèmes, en général complexes, qui permettent de contrôler des composantes du comportement d'un véhicule en roulage en fonction de paramètres mesurés à bord pour accroître la sécurité. Le document de demande de brevet britannique GB 2409 914 décrit un système de contrôle de l'attitude d'un véhicule équipé au minimum d'au moins un capteur d'accélération longitudinale, un capteur d'accélération latérale et un capteur de vitesse de lacet, en plus d'un capteur de vitesse véhicule par rapport au sol. Or comme il a été expliqué précédemment, ce dernier paramètre pourtant essentiel n'est pas aisément accessible de façon directe et en toutes circonstances à bord du véhicule. De fait, sa détermination constitue précisément un objet de la présente invention. Par ailleurs les moyens présentés dans ce document pour contrôler essentiellement le tangage et le roulis instantanés du véhicule s'apparentent volontiers à un catalogue des relations physiques qui gouvernent la cinématique et la dynamique d'un véhicule en roulage. Certes les relations qui lient les accélérations angulaires de roues à l'accélération longitudinale mesurée à bord du véhicule sont présentées pour montrer qu'on peut en principe déduire de ces données des indications sur l'angle d'inclinaison de l'axe longitudinal du véhicule. Mais aucune information n'est apportée en ce qui concerne un éventuel emploi de cette donnée pour estimer la vitesse globale du véhicule ni un enseignement concret adapté à la résolution du problème évoqué.

De même, le document de demande de brevet européen EP 1 832 881 décrit un système destiné à fournir une estimation de l'accélération instantanée d'un véhicule, notamment une motocyclette équipée d'un système ABS, à partir des mesures fournies par deux accéléromètres de bord, sensibles l'un à l'accélération dans le sens de déplacement longitudinal du véhicule et l'autre à son accélération verticale. Selon la méthode, on détermine l'angle de tangage du véhicule à partir de ces deux mesures pour obtenir une estimation de l'accélération du véhicule dans la direction de son déplacement, corrigée pour les effets de tangage notamment dans les phases d'accélération ou de freinage intense qui se traduisent par des couples de basculement du véhicule vers l'avant ou vers l'arrière autour de son centre de gravité qui affectent les indications des appareils de mesure. Selon les propositions de ce document les mesures issues des accéléromètres sont traitées par des filtrages de Kalman pour éliminer les dérives qui affectent les signaux d'accélérations mesurées. Les valeurs d'accélération corrigées sont combinées pour fournir à chaque instant une accélération de mouvement du véhicule précise, débarrassée de ces dérives et des effets du tangage. Lors du roulage en régime stable (accélération comprise dans une fourchette de plus ou moins 0.2 m/s$^2$) la mesure des vitesses de roues est utilisée pour fournir une indication de la vitesse du véhicule. Dès que le véhicule quitte ce régime stable par suite d'un accélération ou d'une décélération, le système est adapté à calculer la vitesse véhicule à partir d'une intégration de l'accélération compensée pour le tangage.

Par rapport à cet état de la technique, l'invention se caractérise d'une part par le fait que les mesures de vitesse des roues constituent la base principale du suivi de la vitesse véhicule, essentielle au contrôle du véhicule, y compris dans des phases de transition de vitesse dans lesquelles on détecte que la condition d'adhérence des roues reste compatible avec la précision de mesure ou la sécurité. Ceci est obtenu grâce à l'utilisation d'une batterie de critères pour apprécier la validité des informations de vitesse concernant chaque roue. On rappelle que l'utilisation de ces critères est principalement liée au contrôle du couple appliqué à chaque roue du véhicule. A cet égard la condition individuelle de chaque roue reste une priorité dans le cadre de la présente invention même lorsque le diagnostic individuel de chaque roue détecte qu'aucune d'entre elles ne fournit à un moment donné de mesure valable pour l'estimation de la vitesse du véhicule. C'est à ce moment là seulement qu'intervient le recours à l'intégration d'une information d'accélération véhicule dûment corrigée en fonction de la pente de sa trajectoire. Conformément à l'invention cette correction est réalisée d'abord en fonction des informations issues des capteurs de roues ainsi que de la mesure d'un gyromètre fournissant la vitesse de tangage du véhicule comme il est exposé de manière plus détaillée ci-après. Revenant à l'état de la technique, les instants au cours desquels l'accélération d'un véhicule est comprise entre plus et moins 0.2 m/s2 sont extrêmement aléatoires et potentiellement fugitifs en fonction des conditions de conduite rencontrées. Il s'ensuit que le recalage de la vitesse véhicule par rapport aux vitesses des roues peut également être aléatoire et fugitif et donc les dérives dues à l'intégration de l'accélération pour la détermination de la vitesse véhicule peuvent devenir importantes.

La présente invention a ainsi pour objet un système pour véhicule terrestre permettant de déterminer un paramètre angulaire affectant la position dans l'espace, ou l'attitude, d'un véhicule en mouvement sur le sol, tel que la pente du sol de roulement ou les angles de tangage et/ou de roulis de la caisse du véhicule. Une telle mesure permet d'améliorer la connaissance et le suivi des mouvements du véhicule et d'offrir ainsi un moyen d'agir plus efficacement sur son comportement.

L'invention est particulièrement bien adaptée aux véhicules dans lesquels l'entraînement et le freinage de chaque roue motrice du véhicule sont intégralement ou totalement obtenus à partir d'une même machine électrique, spécifique de cette roue. Elle est notamment performante pour réaliser le contrôle en roulage des couples appliqués par la machines électriques à chacune des roues concernées, notamment pour en contrôler en temps réel le glissement ou le coefficient d'adhérence instantanés.

*BREVE DESCRIPTION DES FIGURES*

D'autres objectifs et avantages de l'invention apparaîtront clairement-dans la description qui va suivre d'exemples de réalisation préférés mais non limitatifs, illustrés par les figures suivantes dans lesquelles :

la figure 1a représente schématiquement un système de contrôle de l'entraînement et du freinage d'un véhicule électrique à quatre roues motrices, à production d'énergie électrique à bord ; la figure 1b est un schéma plus détaillé d'une partie de la figure 1a;

la figure 2 est un diagramme illustrant la variation du coefficient d'adhérence d'une roue en fonction du glissement de cette roue par rapport au sol ;

la figure 3 est un schéma bloc illustrant le fonctionnement d'un module de mesure de glissement et pilotage de courant en fonction de cette mesure selon un aspect de l'invention;

les figures 4a et 4b sont des organigrammes du fonctionnement d'un autre module du système de l'invention;

les figures 5a et 5b illustrent les explications concernant la détermination de l'angle de pente du sol à partir des données mesurées par le véhicule:

la figure 6 illustre très schématiquement un étage de traitement des signaux pour la correction des mesures de pente et d'accélération.

les figures 7a, 7b et 7c sont des diagrammes des signaux produits dans l'étage de traitement de signal de la figure 6.

La figure 8 précise la définition des points d'application des forces agissant sur le véhicule.

*DESCRIPTION D'UN OU PLUSIEURS EXEMPLES DE REALISATION*

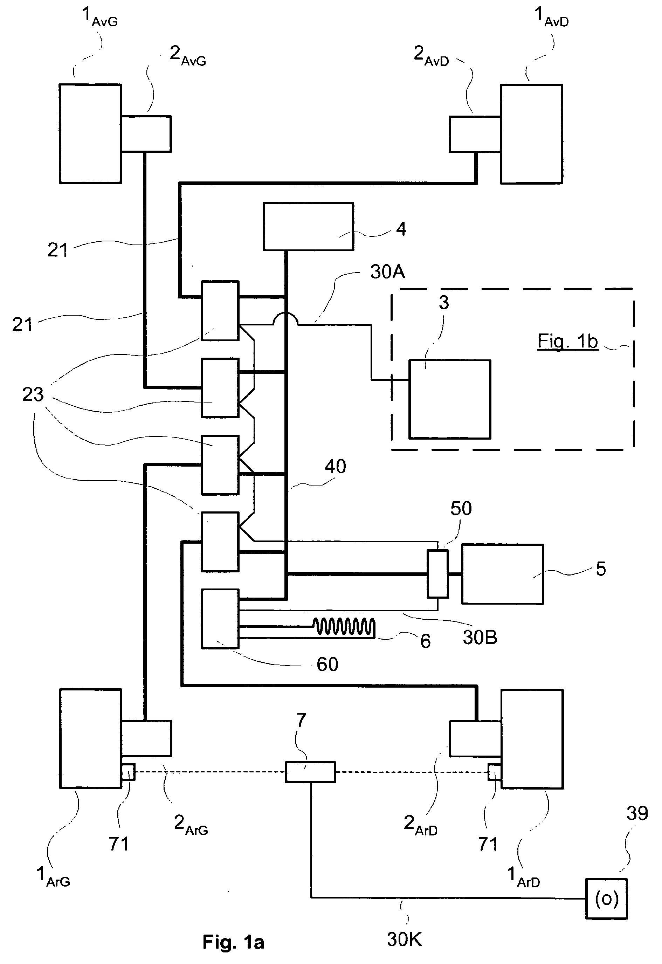

A la figure 1a, on a schématisé un véhicule à quatre roues $1_{AvG}$, $1_{AvD}$, $1_{ArG}$ et $1_{ArD}$. Les roues sont notées

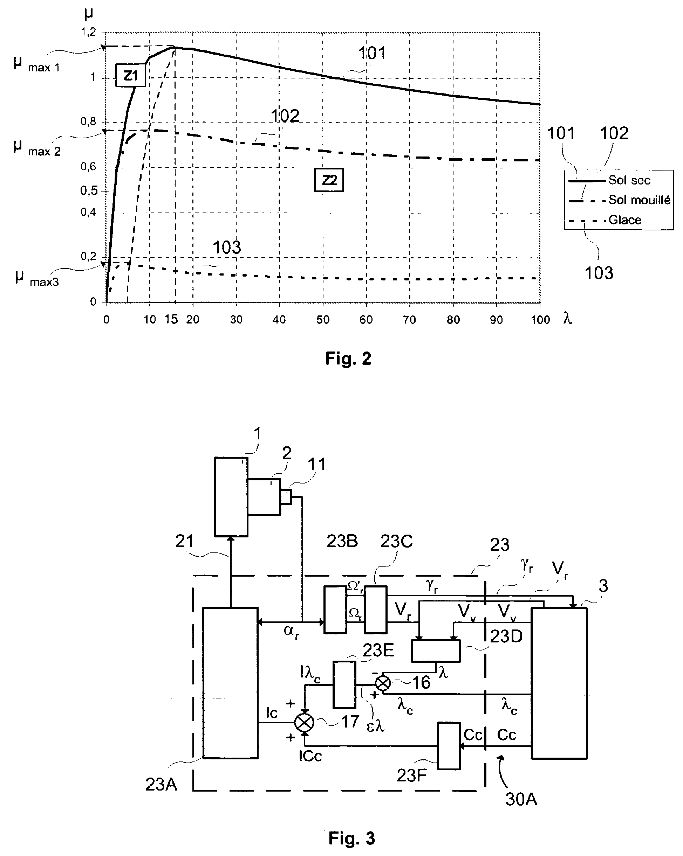

$1_{AvG}$ pour la roue avant gauche, $1_{AvD}$ pour la roue avant droite, $1_{ArG}$ pour la roue arrière gauche et $1_{ArD}$ pour la roue arrière droite. Chaque roue est équipée d'une machine électrique qui lui est couplée mécaniquement. On voit les machines électriques $2_{AvG}$, $2_{AvD}$, $2_{ArG}$ et $2_{ArD}$. Dans la suite, on ne reprendra pas les indices désignant spécifiquement la position de la roue 1 ou de la machine électrique 2 dans le véhicule lorsque cela n'apporte rien à la clarté de l'exposé. Les machines électriques de traction 2 sont des machines triphasées de type synchrone autopilotées. Elles sont équipées chacune d'un capteur de position angulaire de type resolver 11 (fig. 3) intégré à l'arrière de la machine et sont pilotées chacune par un module électronique respectif de pilotage de roue 23 auquel elles sont reliées par des lignes électriques de puissance 21.

Les modules électroniques de pilotage de roue 23 sont conçus pour piloter les machines électriques en couple à partir de la mesure des courants dans la machine et de la mesure du capteur 11 de position angulaire. Chaque module électronique de pilotage de roue 23 permet d'imposer sélectivement à la roue considérée un couple de pilotage déterminé en amplitude et en signe. De ce fait, les machines électriques peuvent être utilisées en moteur et en génératrice. Chaque module électronique calcule par un traitement numérique la vitesse de rotation $\Omega r$ du rotor de la machine ainsi que son accélération angulaire $\Omega'r$. Connaissant le développement de référence de la roue, et plus exactement de son pneumatique, défini comme la distance linéaire parcourue par le véhicule pour un tour de roue en l'absence de tout couple et effort longitudinal, et connaissant la réduction de l'engrenage de liaison entre l'axe du rotor et la roue, chaque module électronique 23 convertit les vitesse et accélération angulaires, respectivement $\Omega r$ et $\Omega'r$, en vitesse et accélération linéaires, respectivement, $V_r$ et $\gamma_r$, ramenées au véhicule. A noter cependant qu'on pourrait mettre en oeuvre certains principes de l'invention avec une mesure de vitesse de roue indépendante par exemple, pour des roues non équipées de moteurs, utiliser un capteur de vitesse du type capteur à effet Hall pour système ABS (Anti Blocking System) ou fonctionnant sur tout autre principe.

Pour mémoire, dans cet exemple chacune des roues arrières $1_{ArG}$ et $1_{ArD}$ est équipée en outre d'un dispositif de frein mécanique 71 de la roue à l'arrêt et uniquement à l'arrêt, commandé par un actionneur électrique 7 piloté par une unité de commande de freinage. Dans l'application ici décrite de l'invention, aucune des roues du véhicule ne comporte de frein mécanique de service. Quelle que soit l'amplitude du signal de commande du freinage, c'est-à-dire même pour les freinages les plus intenses, le freinage est assuré uniquement en pilotant les machines électriques en génératrice. Les moyens sont prévus pour assurer la consommation de toute la puissance produite même dans un freinage particulièrement puissant. Ces moyens peuvent comprendre une capacité de stockage, des circuits d'utilisation de l'énergie produite en temps réel et des moyens pour dissiper la puissance en excès des deux modes de consommation précédents. Chaque roue comporte une ou plusieurs machines électriques dédiées afin de pouvoir générer une force de freinage sélectivement sur chaque roue, ce que l'on ne pourrait pas faire avec une machine électrique commune à plusieurs roues, par exemple les roues d'un essieu, car il y aurait dans ce cas une transmission mécanique et un différentiel entre les roues. Les machines électriques sont dimensionnées de façon appropriée pour imposer à chaque roue la force de freinage la plus élevée possible.

Afin de permettre d'absorber une puissance électrique élevée, on a installé des résistances électriques de dissipation refroidies efficacement, par exemple par circulation d'eau, les accumulateurs électriques connus n'étant pas capables d'absorber la puissance électrique produite par un freinage d'urgence ou n'étant pas capables d'absorber toute l'énergie électrique produite par un freinage de longue durée, sauf à installer une capacité telle que le poids du véhicule serait vraiment prohibitif. Ainsi, le système électrique ici représenté dont une description plus détaillée peut être trouvée par exemple dans la demande de brevet publiée WO 2007/107576 A1, au nom de l'un des demandeurs, est un système électrique autonome isolé de l'environnement, sans échange d'énergie électrique avec l'extérieur du véhicule, donc applicable aussi aux véhicules automobiles, application des systèmes de freinage électrique beaucoup plus difficile que dans le cas de véhicules reliés à un réseau électrique comme les trains ou les trams urbains.

On peut par exemple choisir de disposer plusieurs machines électriques dont les couples s'additionnent. Dans ce cas, un module électronique de roue peut piloter plusieurs machines électriques en parallèle installées dans une même roue. Au sujet de l'installation de plusieurs machines électriques dans une roue, on consultera par exemple la demande de brevet WO 2003/065546 et la demande de brevet FR 2776966.

Dans l'exemple ici choisi et illustré on décrit une application à un véhicule assurant la production d'énergie électrique à bord. On voit sur la figure la une pile à combustible 4 délivrant un courant électrique sur une ligne électrique centrale 40. Bien entendu, tout autre moyen d'alimentation en énergie électrique peut être utilisé, comme par exemple des batteries. On voit aussi un dispositif de stockage d'énergie électrique constitué dans cet exemple par un banc de super condensateurs 5, relié à la ligne électrique centrale 40 par un module électronique de récupération 50. On voit une résistance électrique de dissipation 6, de préférence plongée dans un liquide caloporteur évacuant les calories vers un échangeur (non représentés), constituant un dispositif d'absorption d'énergie apte à absorber l'énergie électrique produite par l'ensemble des machines électriques au cours d'un freinage. La résistance de dissipation 6 est reliée à la ligne électrique centrale 40 par un module électronique de dissipation 60.

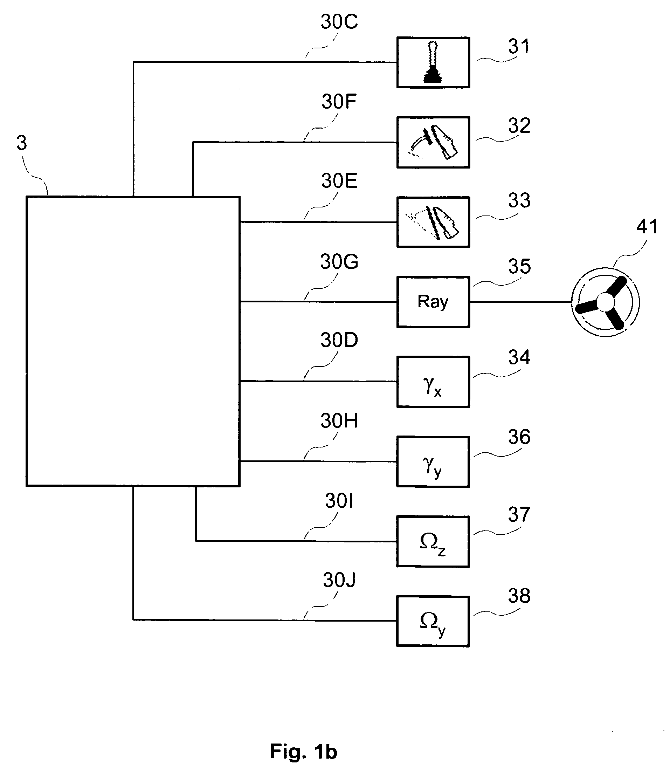

Une unité centrale de calcul et de commande 3 gère différentes fonctions, parmi lesquelles la chaîne de traction électrique du véhicule. L'unité centrale 3 dialogue avec l'ensemble des modules électroniques de pilotage de roue 23 ainsi qu'avec le module électronique de récupération 50 via les lignes électriques 30A (bus CAN ®). L'unité centrale 3 dialogue aussi avec une pluralité de commande détaillées sur la figure 1b, à savoir notamment une commande d'accélération 33 via une ligne électrique 30E, avec une commande de freinage 32 (frein de service) via une ligne électrique 30F, et avec une commande 31 sélectionnant la marche avant ou la marche arrière via une ligne électrique 30C. L'unité centrale 3 dialogue également, via une ligne électrique 30G, avec un capteur ou système de mesure 35 lié à la commande de direction 41 du véhicule et permettant de déterminer le rayon de braquage Ray. Enfin, pour la gestion du comportement dynamique du véhicule dans cet exemple, l'unité centrale 3 dialogue, via une ligne électrique 30D, avec un capteur 34 d'accélération $\gamma$x suivant l'axe longitudinal X du véhicule, via une ligne électrique 30H, avec un capteur ou système de mesure 36 de l'accélération $\gamma$ y suivant un axe transversal Y du véhicule, via une ligne 30I, avec un capteur 37 de vitesse angulaire de lacet $\Omega_{-z}$ autour d'un axe vertical Z du véhicule, et enfin, via une ligne 30J, avec un capteur 38 de vitesse angulaire $\Omega$-y autour de l'axe transversal Y. Les informations issues des ces capteurs, permettent le calcul par l'unité centrale 3, entre autres résultats, des charges dynamiques sur les roues ,telles qu'elles résultent des déports de charge entre les roues avant et arrière ainsi qu'entre les roues droites et gauche du véhicule en fonction des accélérations longitudinale (suivant l'axe X) d'une part, et transversale (Axe Y transversal par rapport à la marche du véhicule).

L'unité centrale 3 assure la gestion du déplacement longitudinal du véhicule, pour ce faire elle contrôle l'ensemble des modules électroniques de pilotage de roue 23. Elle comporte d'une part un mode de fonctionnement en traction activé par un signal de commande dont l'amplitude est représentative de la force totale de traction souhaitée pour le véhicule, ledit signal de commande venant de la commande d'accélération 33, et d'autre part un mode de fonctionnement en freinage activé par un signal de commande dont l'amplitude est représentative de la force totale de freinage souhaitée pour le véhicule, ledit signal de commande venant de la commande de freinage 32. Dans chacun de ces modes de fonctionnement, quelle que soit l'amplitude du signal de commande respectif, l'unité centrale 3 contrôle l'ensemble des modules électroniques de pilotage de roue 23 de façon à ce que la somme des efforts longitudinaux provenant des machines électriques rotatives sur l'ensemble des roues 1 soit une fonction de ladite amplitude du signal de commande. C'est le cas, en particulier pour le mode de fonctionnement en freinage. Autrement dit, il n'y a pas de frein mécanique de service ; le système de freinage électrique décrit ici est le frein de service du véhicule.

Par ailleurs l'unité centrale 3 est programmée pour commander l'application d'un couple de consigne spécifique sur chaque roue en fonction de la charge dynamique de chaque roue de manière à faire travailler chaque pneu selon un programme de comportement déterminé. Ainsi, dans l'exemple ici décrit le programme règle le couple sur chaque roue (et donc l'effort tangentiel respectivement appliqué au sol par chaque roue) en fonction d'une stratégie externe fixée a priori.. En conséquence, comme on le verra plus loin chaque module électronique de pilotage de roue reçoit de l'unité centrale une consigne de couple à partir de laquelle il détermine une valeur de consigne correspondante $I_{cc}$ pour le courant de commande de la machine électrique correspondante.

De retour à la figure 1a, comme indiqué précédemment, l'actionneur 7 du dispositif de frein de parking mécanique 39 est commandé via la ligne électrique 30K uniquement par cette commande de frein de parking 39, et absolument pas par la commande de freinage 32 du frein de service, un dispositif de sécurité étant prévu pour empêcher la mise en oeuvre de ce frein en dehors de la situation de parking. Enfin, le module électronique de récupération 50 dialogue avec le module électronique de dissipation 60 via une ligne électrique 30B.

On expose maintenant les aspects concernant la mise en oeuvre de l'invention proprement dite. La figure 2 représente trois courbes de variation du coefficient d'adhérence ($\mu$) d'une roue 2 de véhicule, qui peut être typiquement équipée d'un pneumatique, en fonction du glissement ($\lambda$) mesuré au contact du sol de roulement, l'une 101 dans le cas d'un sol sec, une autre 102 dans le cas d'un sol mouillé, donc plus glissant, et la troisième 103 dans le cas d'un sol de glace donc très glissant. On peut distinguer dans le plan de ces courbes une première zone hachurée Z1 délimitée à droite par une ligne joignant les maxima des coefficients d'adhérence de ces courbes. Dans cette zone Z1, le fonctionnement de la roue est stable c'est-à-dire que plus le glissement augmente et plus le coefficient d'adhérence augmente également. Ceci permet de transmettre au sol les efforts tangentiels résultant du couple moteur ou freineur appliqué à la roue. Dans une deuxième zone Z2 correspondant aux valeurs de glissement plus élevées le fonctionnement devient instable. Comme on le voit bien pour la courbe 101, lorsque le glissement dépasse un certain seuil, ici d'environ 15%, le coefficient d'adhérence diminue. L'effort tangentiel passé au sol diminue donc et l'excédent de couple non transmis ralentit encore la vitesses de rotation de la roue ce qui provoque encore une augmentation du glissement et ainsi de suite; c'est le phénomène de perte d'adhérence qui conduit rapidement (quelques dixièmes de seconde en général) soit à l'annulation momentanée de la vitesse de rotation de la roue par le freinage avant sa mise en rotation en patinage dans le sens inverse du déplacement du véhicule, soit à sa mise en patinage par accélération dans le sens du déplacement du véhicule.

La valeur maximale du coefficient ($\mu$) dépend du pneumatique, de la nature des conditions (sec, humide, etc.) du sol de roulement. Dans le cas d'un véhicule de tourisme équipé de pneumatiques de bonne qualité en adhérence, la valeur optimale du coefficient d'adhérence correspond à un glissement se situant autour de 5% à 15% Sachant que le coefficient d'adhérence (ici considéré) est défini par le ratio de l'effort tangentiel au sol par la charge perpendiculairement à la surface de celui-ci dans l'aire de contact de la roue au sol, les valeurs mentionnées autorisent donc une décélération maximale de 1,15g, (g étant ici l'accélération de la pesanteur) sur sol sec, de 0,75g sur sol mouillé et de 0.18g sur glace, dans la mesure où l'on pourrait parvenir à maintenir le point de fonctionnement de la roue sur le sol à cet optimum. Un des buts poursuivis par la présente invention est de s'approcher autant que possible de ce fonctionnement par un contrôle adapté des couples appliqués à chaque instant à certaines au moins des roues du véhicule et, notamment, aux roues disposant d'un entraînement et d'un freinage par machine électrique.

Sur la figure 3 on a représenté très schématiquement les éléments d'un dispositif de contrôle du couple de traction ou de freinage appliqué à chaque roue par la machine électrique 2 correspondante en fonction des mesures de glissement opérées sur cette roue conformément à l'invention. Ce mode de représentation est commode pour la bonne compréhension des explications qui vont suivre. Bien entendu l'invention peut être mise en oeuvre à l'aide des dispositifs matériels programmables et logiciels classiques utilisés dans la gestion et le contrôle des véhicules routiers. Le module électronique de roue 23 a pour rôle premier de piloter en couple le ou les moteurs qui lui sont associé(s). La caractéristique couple-courant des machines synchrones triphasées autopilotées 2 étant bien connue, contrôler le courant dans ces machines équivaut donc à piloter ces machines en couple. Dans le module de pilotage de roue 23, cette fonction de base est schématisée par le module 23A qui contrôle le courant sur la ligne de puissance 21 à partir d'une consigne de courant Ic et d'une mesure de position angulaire $\alpha r$ du rotor de la machine 2, délivrée par le resolver 11. Un module de calcul 23F permet de convertir la consigne de couple Cc délivrée par l'unité centrale 3 en consigne de courant Icc nécessaire pour générer ce couple. L'information de position angulaire $\alpha r$ du rotor de la machine 2 délivrée par le resolver 11 est également exploitée par un module 23B pour calculer la vitesse angulaire, $\Omega r$, ainsi que l'accélération angulaire, $\Omega' r$, dudit rotor. Connaissant le développement de référence de la roue, et plus exactement de son pneumatique, défini comme la distance linéaire parcourue par le véhicule pour un tour de roue en l'absence de tout couple et effort longitudinal, et connaissant la réduction de l'engrenage de liaison entre l'axe du rotor et la roue, le module 23C convertit la vitesse angulaire, $\Omega r$, ainsi que l'accélération angulaire, $\Omega' r$, du rotor respectivement en une indication de vitesse linéaire circonférentielle, $V_r$, de roue (ramenée au véhicule comme on le verra plus loin) ainsi qu'en une indication d'accélération linéaire circonférentielle de roue, $\gamma_r$. Ces indications de vitesse et accélération circonférentielles de roue, respectivement $V_r$ et $\gamma_r$, sont transmises à l'unité centrale 3 sur le bus de communication CAN 30A.

En plus de la consigne de couple Cc, le module de pilotage 23 reçoit de l'unité centrale 3, via le bus de communication CAN 30A, une consigne du glissement maximum acceptable ($\lambda$-c) et une indication de la vitesse au sol ($V_v$) du véhicule proprement dit, sur laquelle on reviendra ultérieurement.

Avec une périodicité de 1 ms à 2 ms, le module de pilotage de roue 23 réalise un calcul du glissement $\lambda$ à l'instant considéré selon la formule $(V_r-V_v)/V_v$, schématisé par un bloc 23D qui reçoit les indications numériques $V_v$, de l'unité centrale 3, et $V_r$, issues du module 23C. Au cours d'une phase d'accélération de la roue, la vitesse roue est plus grande que la vitesse véhicule et le glissement, selon la formule définie précédemment, est positif alors qu'au cours d'un freinage la vitesse roue $V_r$ est plus faible que la vitesse véhicule $V_v$ et le glissement est négatif. Pour simplifier l'exposé, on considère par la suite $\lambda$ comme la valeur absolue du glissement, de même que la consigne de glissement maximum $\lambda c$ et la consigne de courant Icc seront toujours considérées comme positives. L'indication de glissement calculé est utilisée (comme schématisé par un module de comparaison 16) pour fournir un signal indicatif de l'écart $\epsilon\lambda$ entre le glissement calculé et le glissement de consigne ($\lambda c$) délivré par l'unité centrale 3. Dans le cas où l'écart $\epsilon\lambda$ entre le glissement calculé $\lambda$ et le glissement de consigne $\lambda c$ indique un dépassement de cette consigne maximum par le glissement instantané, cette information est utilisée par un régulateur 23E, qui peut être par exemple un régulateur PID classique (Proportionnel Intégrale Dérivée), pour générer, une consigne de courant I$\lambda c$. Une consigne de courant globale Ic est ensuite calculée (Bloc additionneur 17) par sommation : (i) de la consigne de courant initiale Icc, générée à partir de la consigne de couple (bloc 23F), et (ii) de la consigne de courant I$\lambda c$ issue du régulateur 23E. C'est cette consigne globale Ic qui est appliquée au module 23A contrôlant le courant de la machine électrique 2, lequel reçoit également l'indication de position angulaire du rotor de la machine électrique délivrée par le resolver 11. Ainsi par exemple, tant que le glissement $\lambda$ reste inférieur à la consigne $\lambda c$, lors d'une phase d'accélération, il ne se passe rien. Si la roue commence à patiner, auquel cas $\lambda$ devient supérieur à $\lambda c$, l'écart avec le glissement de consigne devient négatif. L'indication de courant correspondante I$\lambda c$ à la sortie du module 23E également négative vient donc en diminution de l'indication du courant de consigne initiale Icc dans le bloc de sommation 17 de manière à diminuer le couple appliqué à la roue et maintenir le glissement au maximum à $\lambda c$.)

Les informations traitées par l'unité centrale 3 (consigne de couple Cc, Vitesse véhicule $V_v$, et consigne de glissement $\lambda c$ sont délivrées au module roue 23 à une cadence relativement lente de 10 à 20 ms, relativement lente mais bien adaptée à la dynamique de comportement véhicule. A l'inverse les informations issues des modules propres à chaque roue (23B, 23C, etc. et les traitements effectués par les modules 16, 17, 23D et 23E sont effectués à une cadence relativement rapide, correspondant à une période de 1 à 2 millisecondes, bien adaptée à la dynamique de roue. Sachant enfin que chaque module électronique de pilotage de roue 23 permet d'imposer sélectivement à la roue considérée un couple de pilotage déterminé en amplitude et en signe, on dispose ainsi d'un système rapide et efficace permettant un contrôle permanent du glissement dans le sens freineur (anti-inversion de rotation) et dans le sens moteur (anti-patinage) et cela sur chaque roue commandée intégralement en traction et en freinage par la seule machine électrique. On réalise de la sorte un véritable contrôle automatique de l'adhérence de la roue avec son pneumatique.

Conformément à un autre aspect de l'invention, le système est agencé pour permettre de déterminer une valeur globalement représentative de la vitesse au sol du véhicule à l'aide des mesures instantanées obtenues à bord et de corriger éventuellement cette valeur pour obtenir la vitesse au sol du véhicule à l'endroit de chaque roue afin que le calcul du glissement correspondant reste aussi précis que possible en toute circonstance et notamment en virage.

Certains aspects de cette technique reposent sur la détermination du coefficient d'adhérence d'une roue donnée à un instant considéré qui doit être exposée au préalable. Lorsque la roue n'est soumise qu'au seul couple fourni par la ou les machines électriques auxquelles elle est couplée, (soit parce qu'elle ne comporte ni entraînement par moteur à combustion interne, ni freinage mécanique, typiquement par friction -- conformément aux enseignements de la demande de brevet déposée par le demandeur rappelée au préambule -- soit parce qu'elle est temporairement dans cette condition à l'instant considéré), ce couple sur la roue est en correspondance directe avec le courant traversant la ou les dites machines électriques 2. Connaissant le rayon de référence de la roue 1 on peut donc en déduire à chaque instant la force tangentielle exercée au sol par la roue.

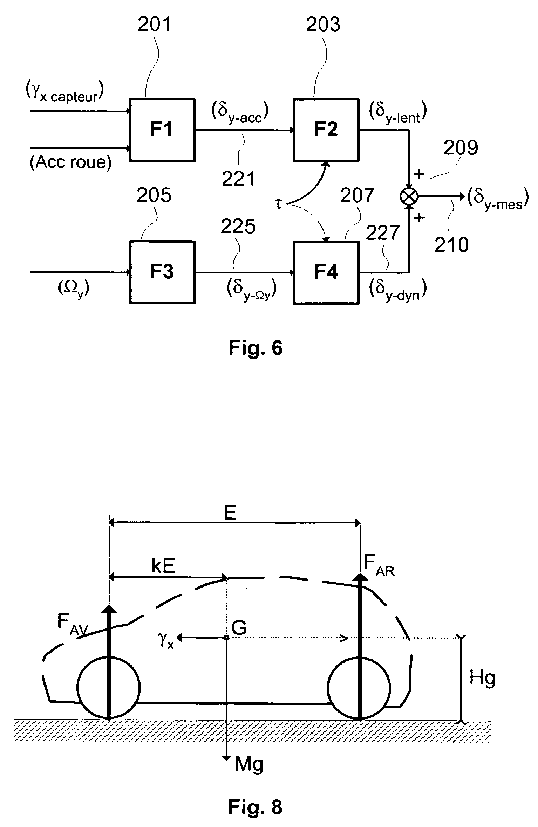

Par ailleurs, connaissant l'empattement E du véhicule (voir figure 8), la masse totale du véhicule M, sa répartition kM et (1-k)M entre le train arrière et le train avant et la hauteur Hg du centre de gravité, connaissant mesurant enfin les accélérations linéaires $\gamma_x$ et $\gamma_y$ fournies par les capteurs ou systèmes de mesure 34 et 36 (fig. 1b), l'unité centrale 3 est en mesure de calculer à chaque instant la charge, ou effort normal $F_{AV}$ et $F_{AR}$, sur les trains avant et arrière. Connaissant la voie V du véhicule l'unité centrale 3 est également apte à déterminer la répartition des charges entre les roues de chacun des trains avant et arrière.

Les grandeurs de masse et de position du centre de gravité peuvent être mesurées à la mise sous tension du véhicule par un système de capteurs adapté ou tout autre équivalent. Dans l'exemple ici décrit on a plus simplement opté pour des valeurs nominales correspondant au modèle de véhicule considéré avec deux passagers à bord. Comme indiqué précédemment, l'unité centrale calcule alors le coefficient d'adhérence instantané $\mu_r$ de la roue comme le rapport entre l'effort tangentiel et l'effort normal exercés au sol par la roue à l'instant considéré.

Revenant maintenant à la détermination de la vitesse véhicule, elle est basée sur un calcul de la moyenne des valeurs de vitesse circonférentielle des roues $V_r$ dérivées des mesures des capteurs 11 et validées préalablement en fonction de critères qui sont maintenant décrits, pour ne retenir que celles de ces valeurs qui sont jugées fiables pour ce calcul. Ainsi, tant qu'au moins une des valeurs de vitesse roue est valide, en fonction de ces critères, elle sert à déterminer la vitesse véhicule de référence à l'instant donné suivant la formule :

$$V_v = \text{Somme } V_r \text{ valides } / \text{ Nb\_roues\_valides} \qquad (g)$$

Si aucune vitesse circonférentielle de roue n'est valide à l'instant donné, la vitesse véhicule est alors calculée par l'unité centrale, à partir de la dernière vitesse véhicule valide obtenue, par intégration d'une indication de l'accélération de mouvement du véhicule estimée comme on le verra ci-après.

La mesure $V_r$ est considérée comme valide si les conditions suivantes sont remplies :

(a) Le système ne détecte pas de défaut dans les échanges d'information numérique circulant sur le bus CAN 30A. Les composants électroniques chargés spécifiquement de gérer la communication sur le bus CAN, et intégrés respectivement à l'unité centrale 3 et à chacun des modules électroniques de roue 23, vérifient le bon fonctionnement du système de communication ainsi que l'intégrité des informations numériques qui y circulent. Lesdits composants génèrent, le cas échéant, une information de défaut CAN utilisable par l'unité centrale 3 et/ou les modules électroniques de roue 23. Par ailleurs, l'unité centrale 3 envoie régulièrement des informations (consignes. ; $V_v$; ...cf. figure 3) aux modules électroniques de roues 23 avec une cadence comprise entre 10 et 20 ms (ici 16 ms ). Si cette cadence n'est pas respectée, le module électronique détecte un défaut CAN (unité centrale absente suite à panne, à coupure de la connexion CAN, ...) et ignore les données en provenance du bus CAN. En symétrie, les modules 23 répondent à l'unité centrale ($V_r$ ; courant; défauts; ...) avec cette même cadence de 16 ms. Si l'unité centrale constate que la cadence n'est pas respecté pour un des modules électroniques 23, elle déclare le module concerné comme absent et ignore ses données (en particulier $V_r$).

(b) Le module électronique de pilotage 23 associé à la roue en question ne détecte pas de défaut du résolver 11.

(c) Ladite roue n'a pas perdu son adhérence au sol. A cet égard on considère qu'il y a perte d'adhérence principalement lorsque l'accélération circonférentielle de roue $\gamma$ -r est anormale, c'est-à-dire trop élevée pour la physique du véhicule. Par exemple on considère qu'une valeur dépassant 0,7g dans le sens moteur et 1,2g dans le sens freineur indique une perte d'adhérence de la roue. Noter que ces valeurs de l'accélération ici sont dérivées des informations fournies par le resolver 11 au module de pilotage de roue 23 et à l'unité centrale. Lorsqu'une perte d'adhérence a été détecté sur une des roues, le retour à une adhérence normale, donc à une mesure de vitesse valide pour ladite roue, n'intervient que si la mesure de glissement de la roue considérée prend une valeur suffisamment faible pour qu'on puisse considérer que l'erreur est acceptable pour la mesure de la vitesse véhicule (3%), ou alors que $\mu r$ est suffisamment faible pour garantir l'adhérence de la roue quel que soit l'état du sol (15% au regard d'un état du sol très glissant correspondant à la courbe 103 de la figure 2).

(d) Le coefficient d'adhérence ($\mu r$) calculé à l'instant considéré est inférieur à une valeur limite ($\mu$ lim) au-delà de laquelle le glissement, tel qu'il résulte des courbes $\mu(\lambda)$ de la figure 2, est jugé trop élevé pour que l'on puisse continuer de considérer la vitesse circonférentielle de la roue comme une première approximation acceptable de la vitesse du véhicule à l'endroit de ladite roue. Si l'on considère par exemple une valeur de ($\mu$-lim) comme représentée aux alentours de 50%, on peut constater que les valeurs de glissement correspondant aux valeurs de $\mu r$ inférieures à cette limite sont petites (courbes 101 et 102). Elles conduisent à une erreur dans la détermination de la vitesse moyenne qui ne dépasse pas 1,5 à 3 %, ce qui est jugé acceptable.

L'observation des courbes de la figure 2 montre que lesdites courbes sont peu dépendantes de l'état du sol, pour des valeurs de $\mu r$ inférieures à $\mu$-lim (aux environs de 50%), lorsque l'adhérence maximum du sol $\mu_{max}$ dépasse $\mu$-lim (cas de $\mu_{max1}$ et $\mu_{max2}$ pour les courbes 101 et 102). Dès lors, connaissant la caractéristique $\mu(\lambda)$ du pneumatique utilisé, en particulier, pour $\mu$ inférieur à 50%, il serait possible de déterminer le glissement $\lambda$ correspondant au $\mu r$ de travail à l'instant considéré et de pondérer en conséquence la mesure de vitesse roue $V_r$..

L'indication du coefficient d'adhérence déterminé comme il a été expliqué peut être entachée d'une erreur, par exemple correspondant aux variations de la charge réelle du véhicule par rapport à une charge nominale prise en compte pour le calcul de l'effort normal sur la roue. Cependant on peut constater à l'observation des courbes 101 et 102 qu'une forte erreur sur le coefficient d'adhérence autour de 50% n'a que peu d'influence sur la valeur correspondante du glissement. On a déterminé en pratique que pour l'application du critère de validité ici décrit (à savoir la validité de l'approximation consistant à utiliser la vitesse circonférentielle d'une roue à la place de la vitesse du véhicule mesurée à l'endroit de celle-ci) que ces imprécisions n'affectaient pas de façon sensible la qualité de la décision opérée à partir de la valeur du coefficient d'adhérence.

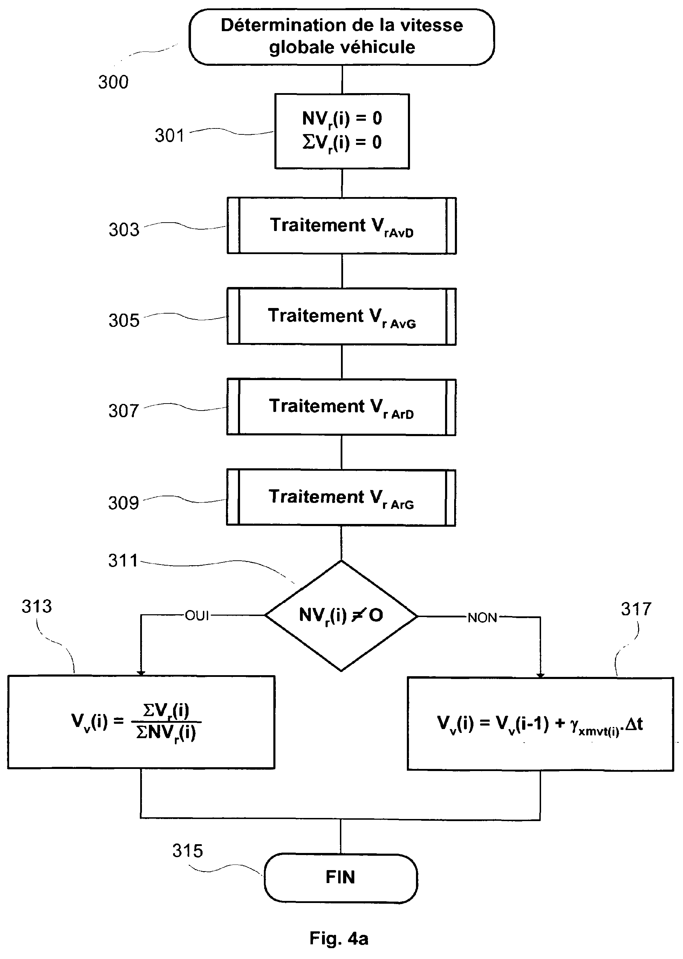

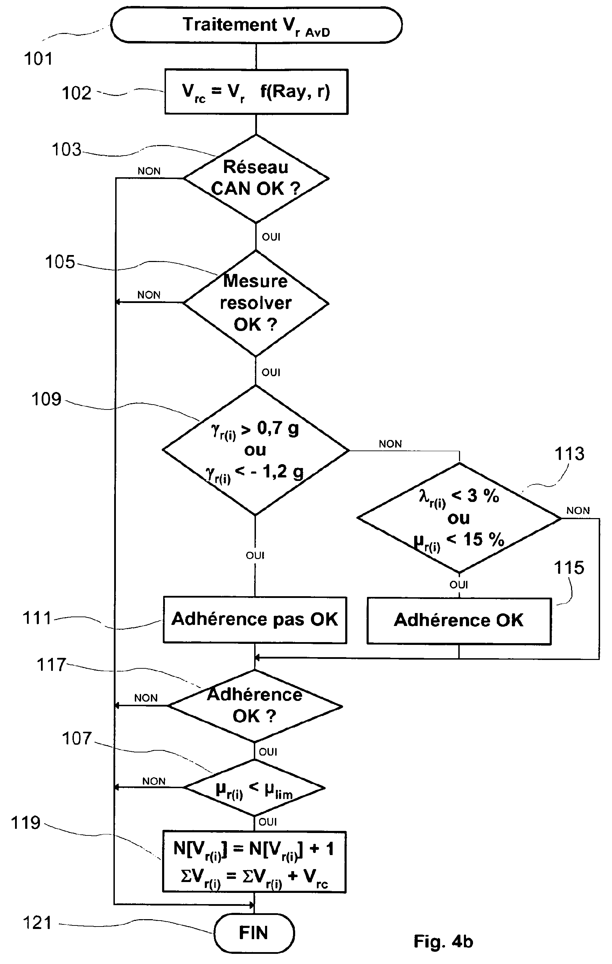

Considérant maintenant le cas d'un sol à coefficient d'adhérence particulièrement faible (courbe 103), la valeur indiquée de ($\mu$-lim) dépasse le coefficient d'adhérence maximum $\mu_{max}$ du sol. La roue concernée a tendance à accélérer très vite de manière anormale mais la perte d'adhérence est alors détecté par le critère (c) exposé précédemment. En revanche on voit que si le coefficient d'adhérence $\mu$ est inférieur à 15% la roue est en situation d'adhérence avec le sol quelque soit l'état celui-ci (courbes 101, 102 ou 103). Cette valeur fournit un critère de test de maintien ou de reprise d'adhérence de la roue. (Voir étape 113 de la figure 4)

Le système détermine ainsi une valeur de la vitesse véhicule qui ne représente pas en toute rigueur la vitesse d'un point fixe prédéterminé du véhicule (par exemple le centre de gravité du véhicule) et qu'on qualifiera ici de "globale". Pour calculer le glissement d'une roue donnée, le système doit encore s'assurer que cette valeur est suffisamment proche au moment considéré de la vitesse au sol du véhicule à l'emplacement de la roue considérée dans la trajectoire du véhicule. Tel est normalement le cas si le véhicule se déplace en ligne droite. Dans ce cas la vitesse globale $V_v$ transmise par l'unité centrale au module 23 permet d'obtenir directement la représentation adéquate du glissement à partir de l'indication de vitesse de roue $V_r$. Tel n'est pas le cas en revanche lorsque le véhicule est en virage. Dans ce cas la vitesse globale du véhicule et sa vitesse au niveau de la roue diffèrent par un coefficient de correction qui est à la fois fonction du rayon de virage et de la position (intérieure ou extérieure) de la roue dans le virage. L'unité centrale 3 est programmée pour déterminer ce coefficient de correction en fonction de l'indication du rayon de braquage Ray transmise sur la ligne 30G en provenance du système de mesure 35 lié à la commande de direction 41 et d'un facteur qui tient compte de la position (intérieure ou extérieure) de la roue dans le virage.

Les coefficients de correction sont établis en fonction d'une relation empirique pour chaque type de véhicule considéré dans cet exemple sur la base de mesures réelles effectuées sur le véhicule considéré. La valeur du coefficient de correction approprié à chaque roue dans la situation instantanée du véhicule (sens et rayon du virage) est utilisée par l'unité centrale 3 pour calculer une valeur de correction correspondante de la vitesse circonférentielle:

$$\Delta\,V_{r\;Ar}\;\text{int},\;\;\Delta\,V_{r\;Ar}\;\text{ext},\;\;\Delta\,V_{r\;Av}\;\text{int et}\;\;\Delta\,V_{r\;Av}\;\text{ext},\;=\mathrm{f(Ray),}$$

(où Ray représente ici le rayon de braquage), pour les roues avant ($_{Av}$), arrière ($_{Ar}$), intérieures (int) et extérieures (ext.) au virage.

La valeur $V_v$ est transmise au module de pilotage 23 correspondant à chaque roue et combinée à la vitesse circonférentielle de cette roue corrigée (V$_r$ + Δ V$_r$) afin de déterminer la valeur du glissement à l'instant correspondant avec une précision suffisante. On notera ici que par souci de clarté on n'a pas représenté à la figure 3 le processus de transmission et d'élaboration des valeurs de vitesse corrigée. En revanche le principe de cette correction est bien pris en compte dans l'organigramme de la figure 4b ci-après.

Les essais du demandeur ont montré que l'on parvenait à déterminer pour chaque roue un coefficient de correction qui donne des mesures corrigées cohérentes à 1,5% près pour toutes les roues concernées.

A ce stade, les figures 4a et 4b donnent un organigramme simplifié de la procédure de détermination de la vitesse véhicule, pour un véhicule à quatre roues électriquement pilotées en couple comme celui de la figure 1. L'organigramme de la figure 4b illustre le traitement du signal de vitesse circonférentielle V$_{rAVD}$ de la roue avant droite 1$_{AVD}$. du véhicule à un instant donné (étape 101) et débute par un calcul (étape 102) de la valeur de cette vitesse V$_{rc\,AVD}$ compensée pour les virages éventuels par un facteur f(Ray, avd) qui tient compte à la fois du rayon de braquage du véhicule et de la position de la roue.1$_{AVD}$ par rapport au sens du virage. Le système procède ensuite à l'examen de sa validité en tant que première approximation de la vitesse véhicule à l'emplacement de cette roue. A cet effet sont vérifiées successivement l'absence de défaut du réseau CAN (étape 103) et de l'information du résolver 11 correspondant (étape 105), puis, dans l'affirmative, la valeur de l'accélération angulaire de ladite roue (étape 109) par rapport à une limite supérieure pour l'entrée en patinage et une limite inférieure correspondant à une décélération pouvant conduire à une inversion du sens de rotation de la roue. Si cette valeur d'accélération est en dehors de l'intervalle défini par ces limites un indicateur de défaut d'adhérence est activée (étape 111). Dans le cas contraire, le processus teste (étape 113) si la dernière valeur de glissement calculée est inférieure à 3% ou si la valeur du coefficient d'adhérence μ est inférieure à 15% d'où il résulte que la roue a retrouvé une condition d'adhérence au sol à l'issue d'une perte d'adhérence, même dans le cas de la courbe 103 (glace, figure 3). Dans l'affirmative ceci entraîne l'activation d'un indicateur d'adhérence (étape 115). Dans la négative le processus vérifie l'état des indicateurs 111 et 115 (étape 117) et si une indication d'adhérence a été détectée vérifie si la valeur du coefficient d'adhérence μ déterminé pour la roue à cet instant est inférieure à la limite supérieure μ$_{lim}$ (étape 107). Si le résultat de l'un des tests 103, 105, 117 ou 107 est négatif, le processus passe directement à la fin du traitement (borne 121) pour la roue 1$_{AVD}$ à l'instant considéré et passe à la roue suivante (comme expliqué plus loin en référence à l'organigramme de la figure 4a. Si le test à l'issue de l'étape 107 est positif un compteur du nombre de roues sélectionnées à l'issue du traitement des signaux de roues V$_r$ dans la séquence examinée pour l'instant considéré est incrémenté. La vitesse de la dernière roue sélectionnée est ajoutée à la somme Σ V$_r$ des vitesses des roues déjà sélectionnées. (étape 119).

Le traitement qui vient d'être passé en revue s'inscrit dans une étape 301 d'un processus de détermination de la vitesse globale véhicule (borne 300) qui commence par une initialisation (étape 301) du compteur de roues sélectionnées et du registre de sommation des vitesses de roues sélectionnées, déjà mentionné. Comme indiqué également les signaux des roues A1 sont traités successivement dans les étapes de traitement 303 à 309. A l'issue de cette phase, l'état du compteur de roues sélectionnées est vérifié (étape 311). Si ce nombre n'est pas nul, le système calcule la moyenne V$_v$ des vitesses de roues sélectionnées (étape 313) et l'affiche comme vitesse globale véhicule pour l'instant considéré (borne 315) à la fin du processus. Si l'étape 311 détecte qu'aucune roue n'a été sélectionnée, la sortie de déclenche un sous processus (étape 317) comme il va être expliqué ci-après.

Ainsi, lorsque aucune mesure de vitesse circonférentielle de roue tirée des capteurs de roues ou resolvers 11 ne peut être retenue pour estimer la vitesse au sol du véhicule à un instant donné, comme par exemple dans le cas d'un freinage appuyé, l'unité centrale 3 calcule la vitesse véhicule par intégration numérique de l'accélération longitudinale de mouvement γ$_{x\text{-}mvt}$ à partir de la vitesse globale déterminée pour l'instant précédent. La vitesse véhicule à chaque instant i est alors fournie par la formule:

$$V_v(i) \;=\; V_v(i\text{-}1) + \gamma x_{\text{-}mvt}.\Delta t, \qquad \text{(f)}$$

où V$v_{(i)}$ est la vitesse véhicule estimée à l'instant t$_i$ ; Vv$_{(i-1)}$ est la vitesse véhicule estimée à l'instant t$_{(i-1)}$ ; γ$_{x\text{-}mvt}$ est l'accélération de mouvement du véhicule et Δt est l'intervalle de temps entre deux calculs successifs (soit 16 ms comme indiqué pour cet exemple).

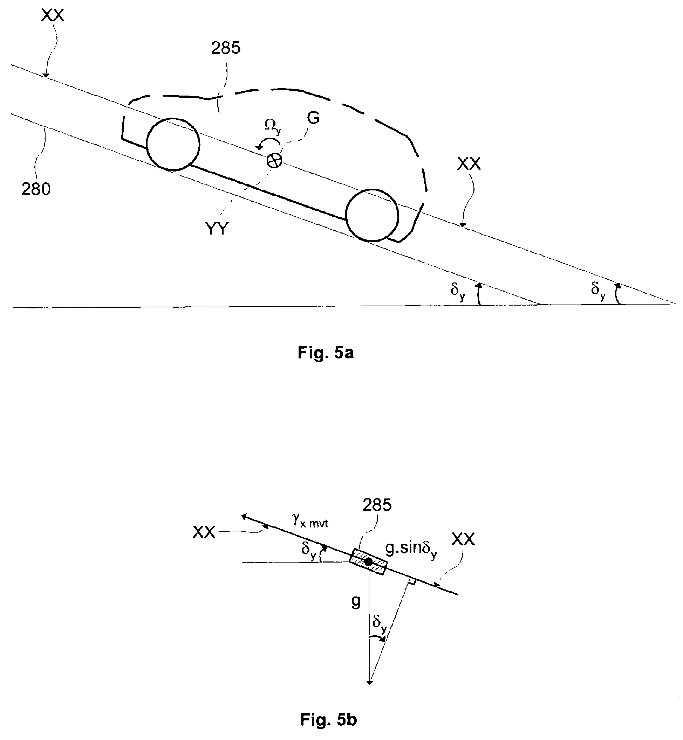

Bien entendu, il est important de disposer alors d'une mesure fiable de l'accélération de mouvement véhicule γ$_{x\text{-}mvt}$. De façon classique, l'accéléromètre 34 utilisé dans le présent exemple est sensible à l'accélération γ$_{x\text{-}mes}$ résultant des efforts appliqués au véhicule dans la direction et le sens de son du déplacement longitudinal. On suppose pour simplifier les explications que l'axe de l'accéléromètre 34 est orienté parallèlement au sol quand le véhicule est à l'arrêt et on néglige dans un premier temps les oscillations de tangage de la caisse du véhicule. Si le sol est horizontal, la mesure γ$_{x\,mes}$ de l'accéléromètre 34 correspond réellement à l'accélération de mouvement γ$_{x\text{-}mvt}$ du véhicule. En revanche, lorsque le sol de roulement 280 est en pente, formant un angle δ avec l'horizontale (figure 5a), l'accélération de mouvement du véhicule 285 suivant son axe de déplacement XX est la résultante de l'accélération γ$_{x\,mes}$ mesurée selon cet axe XX et de la composante de l'accélération de la pesanteur g suivant ledit axe de déplacement du véhicule XX (voir figure 5a et 5b). La valeur de cette composante représente un écart de $g.\sin\delta$ entre la valeur de l'accélération mesure $\gamma_{x\,mes}$ et la valeur réelle de l'accélération $\gamma_{x-mvt}$ de mouvement du véhicule. Ainsi par exemple, une pente de 5% non compensée induit, sur la mesure d'accélération, une erreur de 5% si on freine à 1g (mais de 10% si on ne freine qu'à 0.5g) et sur la vitesse une erreur de 7 km/h au bout de 4 s. Il est en conséquence nécessaire de corriger la valeur $\gamma_{x-mvt}$ pour avoir une mesure de vitesse véhicule acceptable pour la régulation du glissement selon la relation:

$$\gamma_{x-mvt} = \gamma_{x\,mes} - g.\sin\delta y \qquad (a)$$

La correction est effectuée par l'unité centrale 3 qui requiert en conséquence une information fiable sur la valeur de l'angle $\delta$.

On peut avoir un premier accès à l'angle $\delta$ en utilisant les mesures issues des capteurs de roue 11. L'unité centrale 3 calcule une première approximation $\gamma_{x\,roues}$ de l'accélération de mouvement du véhicule à partir des valeurs d'accélération circonférentielle de chaque roue $\gamma_r$ qui lui sont transmises par les modules de roue 23. La relation (a) ci-dessus permet en effet de déduire une estimation de l'angle $\delta$ suivant la formule:

$$\delta_{y-acc} = \text{Arcsin}\,[(\gamma_{x\,mes} - \gamma_{x\,roues})/g] \qquad (b)$$

Ce calcul fait l'objet d'un premier étage (F1) de traitement numérique des signaux illustré par le bloc 201 de la figure 6.

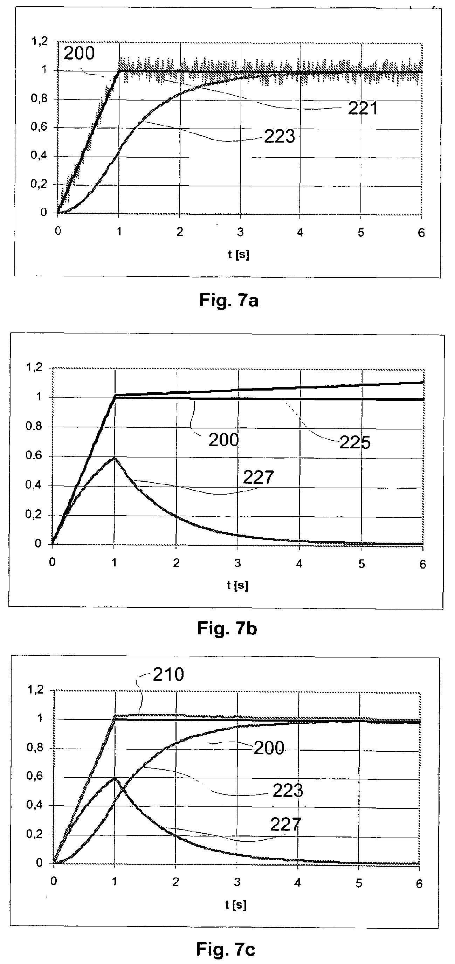

En pratique le signal correspondant à cette estimation est très bruité. En outre,il peut arriver qu'une des roues concernées soit en situation de perte d'adhérence et que l'indication $\gamma_{x\,roues}$ qui entre dans le calcul de $\delta_{y-acc}$ soit momentanément perturbée. Le traitement qui suit est illustré par la figure 7a qui représente (Graphe 200) un diagramme de la courbe de variation 200 en fonction du temps de l'angle $\delta_{-réel}$ de 0 à 1 (valeurs arbitraires) lors d'un changement de pente du sol et la variation correspondante de l'estimation 221 (relation (b)) à la sortie de l'étage F1. Une étape supplémentaire pour améliorer la qualité de la mesure consiste à opérer un filtrage numérique passe-bas (étage F2 - bloc 203) des valeurs numériques issues de F1. Sur la figure 7a on voit la courbe de variation 223 du signal $\delta_{y-lent}$ à la sortie de F2 qui est en retard sur la variation de l'angle mais offre une bonne précision sur le long terme.

Pour obtenir une indication améliorée de l'angle $\delta$ qui présente à la fois une précision et une dynamique suffisantes, l'unité centrale 3 combine le résultat avec une autre approximation de l'angle $\delta_{-dyn}$ issue des mesures du capteur 38 de la vitesse angulaire du véhicule $\Omega_y$ autour de l'axe YY parallèle au sol et perpendiculaire à l'axe XX de mouvement du véhicule. Ce signal est intégré dans le temps (étage F3, bloc 205 fig. 6) pour fournir une estimation de la variation de l'angle $\delta$ ($\delta_{y-\Omega y}$) à la sortie de F2 représentée en 225 sur le diagramme de la figure 7b. Ce signal est bien représentatif de la variation d'angle recherchée sur le court terme mais sujette à dérive sur le long terme. Il fait l'objet d'un filtrage numérique passe-haut (étage F4 - bloc 207 - figure 6) avec la même constante de temps que le filtrage passe-bas opéré par l'étage F2 pour fournir l'indication numérique dont on voit la représentation 227 sur la figure 7b. Les sorties des étages F2 et F4 (figure 6) sont sommées dans un étage 209 pour fournir l'indication compensée 210 recherchée de l'angle $\delta$, (voir courbe 210 du diagramme de la figure 7c).

La place des opérations qui viennent d'être détaillées ici dans l'ensemble du processus de détermination de la vitesse globale du véhicule conformément à l'invention est représentée par l'étape 317 de l'organigramme de la figure 4a. Connaissant l'angle $\delta$ avec la précision souhaitée le système calcule l'accélération de mouvement comme il a été expliqué à propos de la relation (a) puis la vitesse globale véhicule est calculée suivant la relation (f). La vitesse globale véhicule ainsi calculée pour l'instant considéré est affichée à l'étape 315, à défaut d'une détermination valide qui serait issue directement des signaux de roues.

Dans les faits, l'angle de pente $\delta$ est la somme de deux composantes, à savoir la pente $\delta_1$ du sol de roulage proprement dite et l'angle $\delta_2$ entre l'axe de déplacement du véhicule XX et le sol en fonction des oscillations de tangage du véhicule autour d'un axe YY. En pratique, le calcul et les essais montrent que la variation de cet angle a une incidence faible sur la précision des corrections que l'on cherche à effectuer, sachant qu'en toute rigueur la correction pourrait être réalisée par le calcul selon les principes précédents si les circonstances l'exigent.

Dans un exemple de réalisation basé sur les principes qui viennent d'être décrit de façon détaillée, avec un véhicule à quatre roues motrices contrôlées seulement par des machines électriques, c'est-à-dire en particulier sans freinage mécanique du mouvement, on a obtenu des décélérations moyennes en freinage de 80 km/h à zéro km/h de l'ordre de 1 à 1,05g sur sol sec. Dans cette forme de réalisation, on a adopté une valeur de consigne unique de glissement pour toutes les roues, fixée à 15 %. Cependant la mise en oeuvre de l'invention n'exclut pas l'adoption de schéma de contrôle plus sophistiqués dans lesquels on fait varier la consigne de glissement de façon auto adaptative, par exemple en observant l'adhérence ou tout autre facteur pertinent ayant conduit à activer le régulateur de glissement à l'instant considéré, pour approcher au plus près de l'optimum de décélération de la roue qui permet de conserver l'adhérence et le bon comportement du véhicule dans les conditions particulières de roulage du moment.

Bien entendu il existe dans la pratique d'autres méthodes pour accéder à certaines données nécessaires pour exploiter correctement les mesures réalisées. Ainsi par exemple l'utilisation d'un inclinomètre à bord du véhicule pourrait fournir des mesures supplémentaires pour fiabiliser la détermination instantanée de l'angle $\delta$.

C'est ainsi qu'on connaît également des techniques de détermination de la vitesse véhicule basées sur une interruption très brève du couple appliqué sur une ou plusieurs roues pour obtenir une valeur de la vitesse véhicule directement à partir du capteur de roue correspondant. On peut réduire périodiquement pendant quelques fractions de seconde le couple sur un train de roues ($_{Av}$ ou $_{Ar}$ par exemple) pour rétablir brièvement l'adhérence d'une roue sur sol glissant et obtenir une ou plusieurs mesures de la vitesse $V_r$ qui soient reconnues comme valides pour obtenir une estimation recalée de vitesse globale à partir de laquelle par exemple une intégration de l'accélération de mouvement peut être poursuivie en l'absence de signaux valides en provenance des capteurs de roues.

On doit souligner à quel point l'application de l'invention est appropriée à un système tel que celui qui a été retenu ci-dessus à titre d'exemple. Un tel véhicule est équipé de quatre roues motrices qui sont chacune couplée à une machine électrique rotative respective conçue et agencée pour que la traction et le freinage soient entièrement assurés à partir des couples exercés par cette machine sur la roue correspondante, sans aucun freinage mécanique. Ce système permet en effet une connaissance précise à tout moment du sens et de l'intensité de ces couples et par conséquent leur pilotage précis en fonction des valeurs de glissement calculées pour optimiser l'adhérence de chaque roue de façon indépendante et en toute circonstance.

L'invention peut également trouver des applications à des véhicules comportant seulement une ou deux roues (par exemple à l'avant) couplées à une machine électrique rotative et une ou deux roues non motrices. Dans ce cas les roues motrices peuvent bénéficier d'un freinage électrique pur ou en plus d'un freinage mécanique, la pédale de commande de freinage actionnant alors un capteur dans la première partie de sa course, via l'unité centrale, un freinage purement électrique sur les deux roues avant. Dans la suite de sa course la pédale de frein agit sur un circuit hydraulique classique pour générer un freinage mécanique supplémentaire sur les quatre roues.

Le principe de détermination de la vitesse véhicule peut être adapté à une mesure de vitesse seulement sur les deux roues équipées de moteurs (par exemple à l'avant). On peut également envisager dans ce cas, comme évoqué plus haut, d'équiper les roues arrière du véhicule avec seulement des capteurs de vitesse pour participer également à la génération de l'indication de vitesse véhicule par rapport au sol. Dès lors le régulateur de glissement peut tout à fait fonctionner sur les roues avant dans le sens moteur (prévention du patinage). Il peut aussi fonctionner dans le sens freinage pour éviter l'annulation et l'inversion de la rotation des roues dans la première partie de la course de la pédale de freinage où le freinage est purement électrique.

Bien entendu, l'invention n'est pas limitée aux exemples décrits et représentés et diverses modifications peuvent y être apportées sans sortir de son cadre tel que défini par les revendications annexées.

## Revendications

**1.** Système de contrôle de véhicule comportant une détermination de la vitesse au sol instantanée d'un véhicule (285) possédant au moins deux roues (1) équipées chacune d'un capteur (11) propre à fournir une mesure fonction du mouvement de ladite roue, comportant:

a) un module (23B) propre à fournir à chaque instant une indication fonction de la vitesse circonférentielle de chacune de ces roues à partir du capteur correspondant,

b) un capteur d'accélération (34) à bord du véhicule propre à fournir une mesure fonction d'au moins une composante d'accélération longitudinale du véhicule, et

c) un indicateur de vitesse véhicule (313) propre à produire des estimations de vitesse du véhicule par rapport au sol en fonction d'indications issues du module a) pour au moins une roue,

**caractérisé en ce que** l'indicateur de vitesse véhicule comporte:

d) un étage de diagnostic (303 à 309) propre à tester au moins une condition d'adhérence de roues pour rejeter les indications de vitesse issues du module a) correspondant qui ne sont pas valides pour déterminer la vitesse du véhicule par rapport au sol,

e) un étage de test propre à déterminer s'il existe au moins une roue pour laquelle ladite indication de vitesse n'a pas été rejetée,

f) un premier module pour fournir en cas de réponse affirmative au test e) une détermination de la vitesse véhicule à partir des indications non rejetées,

g) un estimateur opératoire en cas de réponse négative au test e) pour fournir une estimation de l'accélération du mouvement du véhicule ($\gamma_{mvt}$) par rapport au sol, en fonction de la mesure du capteur d'accélération b) et d'au moins une mesure d'accélération angulaire obtenue à partir d'au moins un desdits capteurs de roue, pour tenir compte notamment de la pente du sol de roulage véhicule et

h) un deuxième module (317) pour l'intégration d'une fonction de l'accélération de mouvement produite par l'estimateur g), à partir d'une détermination de la vitesse véhicule à un instant précédent, pour déterminer la vitesse véhicule par rapport au sol en cas de réponse négative au test e).

2. Système de contrôle du comportement d'un véhicule par rapport au sol, selon la revendication 1, **caractérisé en ce que** l'étage de diagnostic d) est adapté à vérifier la validité des indications issues de chaque roue pour fournir une indication de vitesse circonférentielle à partir du test d'au moins deux critères d'adhérence au sol choisis parmi les trois critères suivants:

x) l'accélération angulaire instantanée de la roue,

y) la mesure du glissement instantané de cette roue, déterminée à partir des informations de vitesse angulaire issues du capteur correspondant et d'une estimation de la vitesse globale véhicule établie à un instant précédent, et

z) la valeur du coefficient d'adhérence de cette roue déterminée à partir d'informations accessibles à bord du véhicule

3. Système de contrôle du comportement d'un véhicule par rapport au sol, selon la revendication 1 ou 2, **caractérisé en ce que** l'estimateur d'accélération de mouvement g) est relié à

i) un premier dispositif de calcul (201) pour tirer une indication fonction de l'inclinaison longitudinale du véhicule par rapport à l'horizontale à partir de la mesure issue du capteur d'accélération et d'une mesure obtenue à partir d'un capteur de roue.

4. Système de contrôle du comportement d'un véhicule par rapport au sol, selon la revendication 3, **caractérisé en ce qu'**il comporte en outre :

j) un capteur sensible aux mouvements de rotation ($\Omega_y$) de la caisse du véhicule autour d'un axe transversal par rapport à l'axe d'avancement longitudinal du véhicule au sol associé à un deuxième dispositif de calcul (225) propre à en tirer une autre indication fonction de l'inclinaison longitudinale du véhicule par rapport à l'horizontale,

et **en ce que** l'estimateur g) est également opératoire en fonction de cette autre indication issue du capteur j) pour déterminer l'accélération du mouvement du véhicule par rapport au sol.

5. Système de contrôle du comportement selon la revendication 4, **caractérisé en ce qu'**il comporte en outre:

k) un filtre numérique passe bas (203) pour le traitement des indications d'inclinaison du véhicule à la sortie du premier dispositif de calcul),

l) un filtre numérique passe haut (207) pour les indications de la pente fournies par le dispositif de calcul en sortie du capteur j), et

m) un étage (209) de composition numérique des indications de sortie des dispositifs de filtrage k) et l) pour délivrer une indication de l'inclinaison du sol corrigée à l'estimateur g).

**Patentansprüche**

1. System zur Steuerung eines Fahrzeugs, das eine Bestimmung der momentanen Geschwindigkeit eines Fahrzeugs (285) relativ zum Boden aufweist, welches wenigstens zwei Räder (1) besitzt, die jeweils mit einem Sensor (11) ausgestattet sind, der dafür eingerichtet ist, einen von der Bewegung des Rades abhängigen Messwert zu liefern, aufweisend:

a) ein Modul (23B), das dafür eingerichtet ist, zu jedem Zeitpunkt ausgehend von dem entsprechenden Sensor eine von der Umfangsgeschwindigkeit jedes dieser Räder abhängige Angabe zu liefern,

b) einen Beschleunigungssensor (34) an Bord des Fahrzeugs, der dafür eingerichtet ist, einen von wenigstens einer Längsbeschleunigungskomponente des Fahrzeugs abhängigen Messwert zu liefern, und
c) einen Fahrzeuggeschwindigkeitsanzeiger (313), der dafür eingerichtet ist, in Abhängigkeit von Angaben, die von dem Modul a) für wenigstens ein Rad ausgegeben werden, Schätzungen der Geschwindigkeit des Fahrzeugs relativ zum Boden zu erzeugen,

**dadurch gekennzeichnet, dass** der Fahrzeuggeschwindigkeitsanzeiger aufweist:

d) eine Diagnosestufe (303 bis 309), die dafür eingerichtet ist, wenigstens eine Haftungsbedingung von Rädern zu prüfen, um die von dem entsprechenden Modul a) ausgegebenen Geschwindigkeitsangaben zu verwerfen, welche nicht gültig sind, um die Geschwindigkeit des Fahrzeugs relativ zum Boden zu bestimmen,
e) eine Prüfstufe, die dafür eingerichtet ist zu bestimmen, ob wenigstens ein Rad existiert, für welches die Geschwindigkeitsangabe nicht verworfen worden ist,
f) ein erstes Modul zum Liefern, im Falle einer positiven Antwort bei der Prüfung e), einer Bestimmung der Fahrzeuggeschwindigkeit ausgehend von den nicht verworfenen Angaben,
g) einen Schätzer, der dafür ausgelegt ist, im Falle einer negativen Antwort bei der Prüfung e) eine Schätzung der Beschleunigung der Bewegung des Fahrzeugs ($\gamma_{mvt}$) relativ zum Boden zu liefern, in Abhängigkeit von dem Messwert des Beschleunigungssensors b) und wenigstens einem Messwert der Winkelbeschleunigung, der ausgehend von wenigstens einem der Radsensoren erhalten wird, um insbesondere die Steigung des Bodens, auf dem das Fahrzeug fährt, zu berücksichtigen,
h) ein zweites Modul (317) zur Integration einer von dem Schätzer g) erzeugten Funktion der Beschleunigung der Bewegung ausgehend von einer Bestimmung der Fahrzeuggeschwindigkeit zu einem vorhergehenden Zeitpunkt, um die Fahrzeuggeschwindigkeit relativ zum Boden im Falle einer negativen Antwort bei der Prüfung e) zu bestimmen.

2.  System zur Steuerung des Verhaltens eines Fahrzeugs relativ zum Boden nach Anspruch 1, **dadurch gekennzeichnet, dass** die Diagnosestufe d) dafür eingerichtet ist, die Gültigkeit der von jedem Rad stammenden Angaben zu überprüfen, um eine Angabe der Umfangsgeschwindigkeit ausgehend von der Prüfung von wenigstens zwei Kriterien der Bodenhaftung zu liefern, die aus den folgenden drei Kriterien ausgewählt sind:

x) der momentanen Winkelbeschleunigung des Rades,
y) dem Messwert des momentanen Schlupfes dieses Rades, der ausgehend von den Winkelgeschwindigkeitsinformationen, die von dem entsprechenden Sensor ausgegeben werden, und von einer zu einem vorhergehenden Zeitpunkt vorgenommenen Schätzung der globalen Fahrzeuggeschwindigkeit bestimmt wird, und
z) dem Wert des Haftungskoeffizienten dieses Rades, der ausgehend von an Bord des Fahrzeugs verfügbaren Informationen bestimmt wird.

3.  System zur Steuerung des Verhaltens eines Fahrzeugs relativ zum Boden nach Anspruch 1 oder 2, **dadurch gekennzeichnet, dass** der Schätzer der Beschleunigung der Bewegung g) verbunden ist mit

i) einer ersten Berechnungsvorrichtung (201) zum Bestimmen einer von der Längsneigung des Fahrzeugs bezüglich der Horizontalen abhängigen Angabe ausgehend von dem Messwert, der von dem Beschleunigungssensor ausgegeben wird, und einem Messwert, der ausgehend von einem Radsensor erhalten wird.

4.  System zur Steuerung des Verhaltens eines Fahrzeugs relativ zum Boden nach Anspruch 3, **dadurch gekennzeichnet, dass** es außerdem aufweist:

j) einen Sensor, der gegenüber den Drehbewegungen ($\Omega_y$) der Karosserie des Fahrzeugs um eine Querachse bezüglich der Achse der Vorwärtsbewegung des Fahrzeugs in Längsrichtung auf dem Boden empfindlich ist und einer zweiten Berechnungsvorrichtung (225) zugeordnet ist, die dafür eingerichtet ist, daraus eine weitere von der Längsneigung des Fahrzeugs bezüglich der Horizontalen abhängige Angabe zu bestimmen,

und dadurch, dass der Schätzer g) außerdem dafür ausgelegt ist, in Abhängigkeit von dieser von dem Sensor j) ausgegebenen weiteren Angabe die Beschleunigung der Bewegung des Fahrzeugs relativ zum Boden zu bestimmen.

5.  System zur Steuerung des Verhaltens nach Anspruch 4, **dadurch gekennzeichnet, dass** es außerdem aufweist:

k) ein digitales Tiefpassfilter (203) zur Verarbeitung der Angaben zur Neigung des Fahrzeugs am Ausgang der ersten Berechnungsvorrichtung,

l) ein digitales Hochpassfilter (207) für die Angaben der Steigung, die von der Berechnungsvorrichtung am Ausgang des Sensors j) geliefert werden, und

m) eine Stufe (209) zur digitalen Verkettung der Angaben am Ausgang der Filtervorrichtungen k) und l), um dem Schätzer g) eine korrigierte Angabe zur Neigung des Bodens zu liefern.

**Claims**

1. Vehicle control system comprising a determination of the instantaneous ground speed of a vehicle (285) having at least two wheels (1), each equipped with a sensor (11) designed to supply a measurement that is a function of the movement of said wheel, comprising:

    a) a module (23B) suitable for supplying at each instant an indication that is a function of the circumferential speed of each of these wheels from the corresponding sensor,
    b) an acceleration sensor (34) on board the vehicle suitable for supplying a measurement that is a function of at least one longitudinal acceleration component of the vehicle, and
    c) a vehicle speed indicator (313) suitable for producing overall speed estimations of the vehicle relative to the ground as a function of indications deriving from the module a) for at least one wheel,

    **characterized in that** the vehicle speed indicator comprises:

    d) a diagnostic stage (303 to 309) suitable for testing at least one condition of the corresponding wheel at a considered instant as a function of the speed indications deriving from the module a) to reject said speed indication if the test is not satisfied,
    e) a test stage suitable for determining if there is at least one wheel for which said speed indication has not been rejected,
    f) a first module for supplying, in the event of an affirmative response to the test e), a determination of the vehicle speed from the non-rejected indications,
    g) an estimator that is operative in case of a negative response to the test e) for supplying an estimation of the acceleration of the movement of the vehicle ($\gamma_{mvt}$) relative to the ground, as a function of the measurement from the acceleration sensor b) and of at least one angular acceleration measurement obtained from at least one of said wheel sensors, to take account of the slope of the vehicle rolling ground, and
    h) a second module (317) for the integration of a function of the movement acceleration produced by the estimator g), from a determination of the vehicle speed at a preceding instant, to determine the vehicle speed relative to the ground in the event of a negative response to the test e).

2. System for controlling the behaviour of a vehicle relative to the ground, according to Claim 1, **characterized in that** the diagnostic stage d) is suitable for testing the validity of the indications obtained from each wheel to supply a circumferential speed indication on the basis of at least two criteria chosen from the following three criteria:

    x) the instantaneous angular acceleration of the wheel,
    y) the measurement of the instantaneous slip of this wheel, determined from angular speed information deriving from the corresponding sensor and an estimation of the overall vehicle speed established at a preceding instant, and
    z) the value of the road grip coefficient of this wheel determined from information that can be accessed on board the vehicle.

3. System for controlling the behaviour of a vehicle relative to the ground, according to Claim 1 or 2, **characterized in that** the movement acceleration estimator g) is connected to

    i) a first computation device (201) for deriving an indication that is a function of the longitudinal inclination of the vehicle relative to the horizontal from the measurement deriving from the acceleration sensor and from a measurement obtained from a wheel sensor.

4. System for controlling the behaviour of a vehicle relative to the ground, according to Claim 3, **characterized in that** it also comprises:

j) a sensor that is sensitive to the rotation movements ($\Omega_y$) of the body shell of the vehicle about a axis that is transversal relative to the longitudinal forward movement axis of the vehicle on the ground associated with a second computation device (225) suitable for deriving therefrom another indication that is a function of the longitudinal inclination of the vehicle relative to the horizontal,

and **in that** the estimator g) is also operative as a function of this other indication obtained from the sensor j) to determine the acceleration of the movement of the vehicle relative to the ground.

5. Behaviour control system according to Claim 4, **characterized in that** it also comprises:

k) a low-pass digital filter (203) for processing the first indications of inclination of the vehicle at the output of the first computation device,
l) a high-pass digital filter (207) for the indications of the slope supplied by the computation device at the output of the sensor j), and
m) a stage (209) for digitally composing the output indications of the filtering devices k) and l) to deliver a corrected indication of the inclination of the ground to the estimator g).

**Fig. 1a**

**Fig. 1b**

**Fig. 2**

**Fig. 3**

Détermination de la vitesse
globale véhicule

300

301    $NV_r(i) = 0$
       $\Sigma V_r(i) = 0$

303    Traitement $V_{rAvD}$

305    Traitement $V_{r\,AvG}$

307    Traitement $V_{r\,ArD}$

309    Traitement $V_{r\,ArG}$

311                    $NV_r(i) \neq O$

313    ──OUI──                    ──NON──    317

$V_v(i) = \dfrac{\Sigma V_r(i)}{\Sigma NV_r(i)}$        $V_v(i) = V_v(i-1) + \gamma_{xmvt(i)} \cdot \Delta t$

315    FIN

Fig. 4a

**Fig. 4b**

**Fig. 5a**

**Fig. 5b**

201          203

$(\gamma_{x\ capteur})$

| F1 | $(\delta_{y-acc})$ | F2 | $(\delta_{y-lent})$ |

(Acc roue)

221          209

$\tau$          207

205          227

225          210

$(\Omega_y)$

| F3 | $(\delta_{y-\Omega y})$ | F4 | $(\delta_{y-dyn})$ |

$(\delta_{y-mes})$

**Fig. 6**

E

kE          $F_{AR}$

$F_{AV}$

$\gamma_x$     G

Hg

Mg

**Fig. 8**

**Fig. 7a**

**Fig. 7b**

**Fig. 7c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5418437 A
- GB 2344799 A
- US 6709075 B
- WO 0176902 A
- GB 2383567 A
- EP 0881114 A
- FR 2871889

- FR 2894033
- WO 2007107576 A
- GB 2409914 A
- EP 1832881 A
- WO 2007107576 A1
- WO 2003065546 A
- FR 2776966